# EUROPEAN PATENT APPLICATION

(11) **EP 4 803 907 A1**
(43) Date of publication of application: **09.09.2026**
(21) Application number: 26161739.3
(22) Date of filing: 02.03.2026
(51) Int. Cl.: G01N 35/02, G01N 35/04, B01L 3/00

(54) **ADAPTER FOR REAGENT CONTAINER**

(30) Priority: 03.03.2025 JP 2025033198
(71) Applicant: Canon Medical Systems Corporation, Tochigi 324-0036 (JP)
(72) Inventor: OMORI, Takahiro, Otawara-shi, 324-0036 (JP); YAMAMOTO, Tetsushi, Otawara-shi, 324-0036 (JP); OGASAWARA, Makoto, Otawara-shi, 324-0036 (JP); KOJIMA, Hideto, Otawara-shi, 324-0036 (JP)
(74) Representative: Marks & Clerk LLP

(57) **Abstract**

According to one embodiment, an adapter is attached to a reagent container used in an automatic analyzing apparatus, is contained in a reagent storage in the automatic analyzing apparatus together with the reagent container to which the adapter is attached, and the adapter includes a main body and a held portion. The main body includes a first opening portion and a second opening portion. The first opening portion is configured such that the reagent container can be attached and detached through the first opening portion. The second opening portion brings air in the reagent storage in contact with the reagent container at a time when the reagent container is contained in the reagent storage. The held portion is provided on the main body and held by a transfer mechanism that the automatic analyzing apparatus includes.

## Description

### FIELD

Embodiments described herein relate generally to an adapter for reagent container.

### BACKGROUND

Conventionally, there is known an automatic analyzing apparatus including a mechanism (automatic reagent loading mechanism) that is configured such that a reagent container (reagent bottle) is put into an input unit of the automatic analyzing apparatus and thereby the reagent bottle is automatically transferred from the input unit to a reagent storage. The automatic reagent loading mechanism can automatically transfer the reagent bottle from the reagent storage to the input unit even in a case where the reagent bottle is taken out.

In the automatic analyzing apparatus including the automatic reagent loading mechanism, a general-purpose reagent bottle common to each company cannot be used, and it is essential to use a dedicated reagent bottle for each manufacturer of the automatic analyzing apparatus.

Against the above-described background, the inventors have discovered that in the operation of the automatic analyzing apparatus including the automatic reagent loading mechanism, there is a problem of a decrease in convenience due to the increase in running cost caused by the use of dedicated reagent bottles and the smallness in the number of reagents that are provided by the dedicated reagent bottles.

### SUMMARY

Examples in accordance with embodiments are set out below.
(1) An adapter that is attached to a reagent container used in an automatic analyzing apparatus, and that is contained in a reagent storage in the automatic analyzing apparatus together with the reagent container to which the adapter is attached, comprising:
   a main body including a first opening portion, and a second opening portion different from the first opening portion; and
   a held portion provided on the main body and held by a transfer mechanism that the automatic analyzing apparatus includes, wherein
   the first opening portion is configured such that the reagent container is attachable and detachable through the first opening portion, and
   the second opening portion brings air in the reagent storage in contact with the reagent container at a time when the reagent container is contained in the reagent storage.
(2) The main body may include a bottom portion, and a side peripheral portion formed vertically upward from a peripheral edge of the bottom portion, and
   the first opening portion may be formed as a region surrounded by an upper end of the side peripheral portion.
(3) The side peripheral portion may include at least four surfaces, and
   the second opening portion may be formed in each of two mutually opposed surfaces of the four surfaces at a time when the reagent container may be attached.
(4) In a case where the reagent container may include a cylindrical mouth portion for inputting and outputting a reagent contained in an inside thereof, the second opening portion may be formed at a position closest from a center axis of the mouth portion.
(5) A lower end of the second opening portion may be at the same position as a bottom surface of a storing space formed in an inside of the main body.
(6) A width of an upper end of the second opening portion may be greater than a width of the lower end of the second opening portion.
(7) The held portion may be provided to project to an outside of the side peripheral portion on a surface that is among the four surfaces and is different from the surface in which the second opening portion may be formed,
   the main body may further include a code opening portion at a position corresponding to a code added to the reagent container, and
   the code opening portion may be formed in the surface which is among the four surfaces and on which the held portion may be provided.
(8) The main body may include two ribs formed along a direction of attachment of the reagent container on an inside of the surface on which the held portion may be provided, and
   at least one of the two ribs does not come in contact with the code added to the reagent container at a time when the reagent container may be attached.
(9) A taper may be formed at an upper end of each of the two ribs.
(10) The adapter may further comprise a plate spring provided in an inside of the main body, wherein
   in a case where the reagent container may include a cylindrical mouth portion for inputting and outputting a contained reagent, the plate spring applies pressure to the reagent container at a time when the reagent container may be attached, thereby setting a positional relationship between a center axis of the mouth portion and the main body.
(11) At a time when the reagent container and a spacer may be attached, the plate spring applies pressure to the reagent container via the spacer, thereby setting the positional relationship between the center axis of the mouth portion and the main body.
(12) The main body may further include a third opening portion in a surface in which the second opening portion may be formed, and
   the third opening portion brings air in the reagent storage in contact with the reagent container at a time when the reagent container may be contained in the reagent storage.
(13) The main body may be formed of a material having a higher strength than a resin.
(14) The main body may be formed of a metallic material as the material.
(15) At least a part of the main body may be formed of a resin having a high transparency.
(16) The main body may use the resin having the high transparency at a position corresponding to a code added to the reagent container.
(17) The reagent container may be attached in the main body from above.

### BRIEF DESCRIPTION OF THE DRAWINGS

FIG. 1 is a block diagram exemplarily illustrating a configuration of an automatic analyzing apparatus using an adapter for general-purpose reagent bottle according to an embodiment.
FIG. 2 is a diagram exemplarily illustrating a configuration of an analysis mechanism of FIG. 1.
FIG. 3 is a perspective view exemplarily illustrating a configuration of the adapter for general-purpose reagent bottle according to the embodiment.
FIG. 4 is a perspective view exemplarily illustrating, from another viewpoint, the configuration of the adapter for general-purpose reagent bottle of FIG. 3.
FIG. 5 is a side view exemplarily illustrating the configuration of the adapter for general-purpose reagent bottle according to the embodiment.
FIG. 6 is a top view exemplarily illustrating the configuration of the adapter for general-purpose reagent bottle according to the embodiment.
FIG. 7 is a cross-sectional view exemplarily illustrating, by a cross section along line VII-VII in FIG. 6, the configuration of the adapter for general-purpose reagent bottle according to the embodiment.
FIG. 8 is a cross-sectional view exemplarily illustrating, in enlarged scale, a configuration of ribs of FIG. 7.
FIG. 9 is a perspective view illustrating a first example of use of the adapter for general-purpose reagent bottle according to the embodiment.
FIG. 10 is a perspective view illustrating a second example of use of the adapter for general-purpose reagent bottle according to the embodiment.

### DETAILED DESCRIPTION

In general, according to one embodiment, an adapter is attached to a reagent container used in an automatic analyzing apparatus, is contained in a reagent storage in the automatic analyzing apparatus together with the reagent container to which the adapter is attached, and the adapter includes a main body and a held portion. The main body includes a first opening portion, and a second opening portion different from the first opening portion. The first opening portion is configured such that the reagent container can be attached and detached through the first opening portion. The second opening portion brings air in the reagent storage in contact with the reagent container at a time when the reagent container is contained in the reagent storage. The held portion is provided on the main body and held by a transfer mechanism that the automatic analyzing apparatus includes.

Hereinafter, embodiments of an adapter for general-purpose reagent bottle will be described in detail with reference to the drawings.

### (Embodiment)

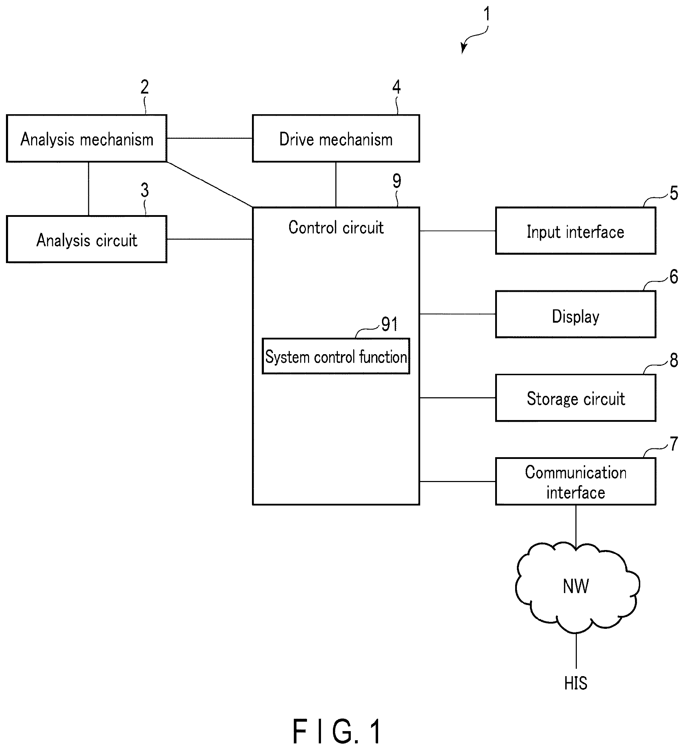

FIG. 1 is a block diagram exemplarily illustrating a configuration of an automatic analyzing apparatus using an adapter for general-purpose reagent bottle according to an embodiment. For example, as illustrated in FIG. 1, an automatic analyzing apparatus 1 according to the present embodiment includes an analysis mechanism 2, an analysis circuit 3, a drive mechanism 4, an input interface 5, a display 6, a communication interface 7, a storage circuit 8, and a control circuit 9.

The analysis mechanism 2 mixes a sample, such as a standard sample or a sample to be examined, with a reagent used for various examination items set for this sample. The analysis mechanism 2 measures a mixed liquid of the sample and the reagent, and generates standard data and examination data, which are associated with, for example, absorbance. In addition, the analysis mechanism 2 measures the mixed liquid of the sample and the reagent, and generates standard data and examination data, which are associated with, for example, electrode potential.

The analysis circuit 3 is a processor that generates calibration data, analysis data, and the like by analyzing the generated standard data and examination data. The analysis circuit 3 reads an operation program from the storage circuit 8, and generates calibration data, analysis data, and the like according to the read operation program. For example, the analysis circuit 3 generates, based on the standard data, calibration data indicating a relationship between the standard data and a standard value set in advance for the standard sample. Further, the analysis circuit 3 generates analysis data, based on the examination data and the calibration data of the examination item corresponding to this examination data. The analysis data includes, for instance, data in which a concentration value and an enzyme activity value are associated, and data in which the concentration of desired ions in the sample are recorded in a time-series manner. The analysis circuit 3 outputs the generated calibration data, analysis data, and the like to the control circuit 9.

The drive mechanism 4 drives the analysis mechanism 2 under the control of the control circuit 9. The drive mechanism 4 is realized by, for example, a gear, a stepping motor, a belt conveyor, a lead screw, and the like. For example, the drive mechanism 4 rotates a reaction disk 104 (to be described later) at a predetermined rotational angle. The predetermined rotational angle is, for example, an angle of rotation in one cycle (to be described later). The drive mechanism 4 rotates a reagent rack of a reagent storage 102 (to be described later).

The input interface 5 receives, for example, by an operator's operation, settings such as analysis parameters for each examination item related to the sample requested to be measured via an in-hospital network NW. The input interface 5 is realized by, for example, a mouse, a keyboard, a touch pad to which an instruction is input by touching an operation surface, and the like. The input interface 5 is connected to the control circuit 9, converts an operation instruction input from the operator into an electric signal, and outputs the electric signal to the control circuit 9.

Note that, in the present specification, the input interface 5 is not limited to those including physical operation components such as a mouse and a keyboard. For example, the input interface 5 may be a processing circuit that receives an electric signal corresponding to an operation instruction that is input from an external input device provided separately from the automatic analyzing apparatus 1, and outputs this electric signal to the control circuit 9.

The display 6 is connected to the control circuit 9, and displays data representing a display target, which is received from the control circuit 9. The display 6 corresponds to, for example, a CRT display, a liquid crystal display, an organic EL display, an LED display, a plasma display, and the like.

Note that the display 6 may be equipped with a touch panel. In this case, the display 6 may include a function of the input interface 5.

The communication interface 7 is connected to, for example, the in-hospital network NW. The communication interface 7 performs data communication with a hospital information system (HIS) via the in-hospital network NW. Note that the communication interface 7 may perform data communication with the HIS via a laboratory information system (LIS) connected to the in-hospital network NW.

The storage circuit 8 includes a recording medium that is readable by a processor, such as a magnetic recording medium, an optical recording medium, or a semiconductor memory. Note that the storage circuit 8 may not necessarily be realized by a single storage device. For example, the storage circuit 8 may be realized by a plurality of storage devices.

Further, the storage circuit 8 stores order information such as an examination order input from the operator, or an examination order received by the communication interface 7 via the in-hospital network NW. The order information includes a sample ID (reagent name), an examination item necessary for a sample that is a measurement target, and a measurement order relating to an examination. The storage circuit 8 stores various setting values for executing a series of operations of the respective components of the automatic analyzing apparatus 1 by one cycle. The storage circuit 8 stores an operation program that is read by the control circuit 9.

The control circuit 9 is a processor that functions as a center of the automatic analyzing apparatus 1. For example, the control circuit 9 outputs a control signal for driving respective components of the analysis mechanism 2 to the drive mechanism 4. The control circuit 9 executes an operation program stored in the storage circuit 8, thereby implementing a function corresponding to this operation program. Note that the control circuit 9 may include a memory that temporarily stores at least a part of the data stored in the storage circuit 8. The function of the control circuit 9 according to the embodiment will be described later.

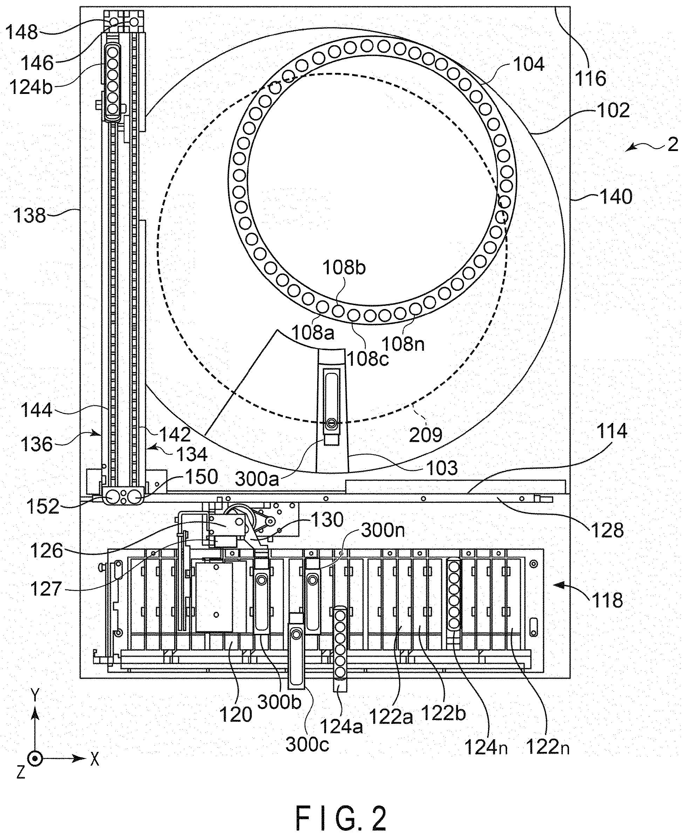

FIG. 2 is a diagram exemplarily illustrating a configuration of the analysis mechanism of FIG. 1. FIG. 2 is a top view of the analysis mechanism 2. The analysis mechanism 2 includes the reagent storage 102, the reaction disk 104, an input unit 118, and a positioner 126. The reagent storage 102 and the reaction disk 104 are disposed in a first region, and the input unit 118 is disposed in a second region.

In FIG. 2, the first region is defined by a first side surface 114 and a second side surface 116 extending in an X direction which is a right-and-left direction direction in a case where the automatic analyzing apparatus 1 is installed, and a third side surface 138 and a fourth side surface 140 extending in a Y direction which is a depth direction in a case where the automatic analyzing apparatus 1 is installed. The first side surface 114 and the second side surface 116 face each other, and the third side surface 138 and the fourth side surface 140 face each other. In addition, the second region is adjacent to the first region and is on the front side of the automatic analyzing apparatus 1 with the first side surface 114 as a boundary.

The reagent storage 102 and the reaction disk 104 have different rotational axes as driving units. In addition, the reaction disk 104 is disposed above (in a Z direction) the reagent storage 102 at a distance. In a case where the analysis mechanism 2 is viewed from above, at least a part of the installation range of the reaction disk 104 overlaps the installation range of the reagent storage 102. Note that the reaction storge 102 and the reaction disk 104 may be arranged adjacent to each other, for example, on the same plane.

The reagent storage 102 cools a plurality of reagent bottles 300a to 300n (n is an arbitrary number) storing a reagent that reacts with a predetermined component included in the standard sample or a predetermined component included in the test sample. In the example of FIG. 2, the reagent bottle 300a, a reagent bottle 300b, a reagent bottle 300c, and the reagent bottle 300n are illustrated. Hereinafter, in a case where any one of the plurality of reagent bottles 300a to 300n is not specified, the reagent bottle is simply referred to as a reagent bottle 300. For example, since the reaction disk 104 is disposed above the reagent storage 102, it is structurally difficult for the operator to directly access the reagent storage 102 regardless of whether the apparatus is operating or stopped. The structure that makes it difficult to directly access is a structure in which the operator cannot easily take the reagent bottle 300 in and out of the reagent storage 102 by himself or herself. An opening 103 that can be opened and closed is provided in an upper portion of the reagent storage 102. An automatic loading mechanism to be described later takes the reagent bottle 300 in and out through the opening 103. In the reagent storage 102, a reagent rack is rotatably provided. The reagent rack holds the plurality of reagent bottles 300a to 300n arranged in an annular shape. The reagent rack is rotated by the drive mechanism 4.

Each of the reagent bottles 300a to 300n has at least one kind of reagent. In the case of a reagent bottle (combination bottle) having two types of reagents, it is assumed that one container (first container) contains a first reagent and the other container (second container) contains a second reagent paired with the first reagent. In the present specification, a case of a reagent bottle having one kind of reagent will be described. In addition, a code (reagent code) associated with information (reagent bottle information) such as a reagent name and a bottle type is added (for example, pasted or printed) to each of the reagent bottles 300a to 300n. Examples of the code include a barcode, a two-dimensional barcode, and a radio tag (IC tag and a radio frequency identification (RFID) tag).

The reaction disk 104 holds a plurality of reaction tubes 108a to 108n (n is an arbitrary number) arranged in a ring shape. The reaction disk 104 is alternately rotated and stopped at a predetermined time interval (hereinafter, referred to as one cycle), for example, 4.5 seconds by the drive mechanism 4. The reaction tubes 108a to 108n are formed of, for example, glass. Hereinafter, a path through which the reaction tubes 108a to 108n move is referred to as a reaction tube annular path.

The input unit 118 receives a plurality of transport tools 124a to 124n (n is an arbitrary number) for transporting a plurality of sample containers and the reagent bottles 300a to 300n. The input unit 118 includes a mounting rack 120 having a plurality of slots 122a to 122n (n is an arbitrary number) for receiving the transport tools 124a to 124n and the reagent bottles 300a to 300n. In the example of FIG. 2, the transport tool 124a, the transport tool 124n, the reagent bottle 300b, the reagent bottle 300c, and the reagent bottle 300n are inserted into any slot in the mounting rack 120. Hereinafter, in a case where any of the slots 122a to 122n is not specified, the slot is simply referred to as a slot 122, and in a case where any of the transport tools 124a to 124n is not specified, the transport tool is simply referred to as a transport tool 124. In addition, the transport tool may be referred to as a sample rack.

Note that the transport tool 124 in FIG. 2 holds six sample containers, but the number of sample containers is not limited thereto. In addition, a code (sample code) associated with, for example, information such as a patient ID is added to each of the sample containers. In addition, the transport tool 124 has an installation area substantially similar to that of the reagent bottle 300, and has a handle portion. The handle portion locks with an automatic loading mechanism to be described later.

The mounting rack 120 may include a plurality of partial racks. For example, in a case where the mounting rack 120 has 25 slots 122 as a whole, and the mounting rack 120 includes five partial racks, one partial rack has five slots. Under such a configuration, in a case where the user loads the transport tool 124 and the reagent bottle 300 into the input unit 118, the transport tool 124 and the reagent bottle 300 may be set in the partial rack in advance, and the partial rack in which the transport tool 124 and the reagent bottle 300 are set may be loaded into the input unit 118. The partial rack may be referred to as a tray.

Furthermore, the input unit 118 is provided with a positioner 126 for transporting the transport tools 124a to 124n and the reagent bottles 300a to 300n. The positioner 126 corresponds to a part of the above-described drive mechanism 4. The positioner 126 can move along a positioner track portion 128 provided in a longitudinal direction (X direction) of the first side surface 114. In addition, the positioner 126 includes an arm 130 that locks with a handle portion provided in each of the transport tools 124a to 124n and the reagent bottles 300a to 300n. The arm 130 is provided to be movable up and down in a vertical direction (Z direction) and to be rotatable in a horizontal direction (XY plane) by the drive mechanism 4. The combination of the positioner 126 and the arm 130 may be referred to as an "automatic loading mechanism" because the automatic sample loading and the automatic reagent loading are performed, or may be simply referred to as a "transfer mechanism". Besides, since the handle portion is a portion held by the transfer mechanism, the handle portion may be referred to as a "held portion".

The positioner 126 and the arm 130 operate to remove the transport tools 124a to 124n and the reagent bottles 300a to 300n inserted into the slots 122a to 122n and to transport the transport tools 124a to 124n and the reagent bottles 300a to 300n to various places along the positioner track portion 128 provided on the first side surface 114.

The positioner 126 includes a code reader 127 for reading a code added to each of the sample containers and the reagent bottles 300a to 300n held by each of the transport tools 124a to 124n. For example, in a case where the transport tool 124 is loaded into the input unit 118, the code reader 127 reads the sample code added to each of the sample containers held by the transport tool 124. Further, for example, in a case where the reagent bottle 300 is loaded into the input unit 118, the code reader 127 reads the reagent code added to the reagent bottle 300. The read code information (code information) is output to the control circuit 9. A plurality of code readers 127 may be provided in the positioner 126. The code reader 127 may not be provided in the positioner 126.

The analysis mechanism 2 includes a first transport tool shuttle 134 and a second transport tool shuttle 136 in parallel to the third side surface 138 in the vicinity of the third side surface 138. For example, after the transport tool 124 is loaded into the input unit 118, the arm 130 of the positioner 126 locks with the transport tool 124. The transport tool 124 locked (hooked) to the arm 130 is transferred to the first transport tool shuttle 134 or the second transport tool shuttle 136 by the arm 130 moving vertically (Z direction) and rotating horizontally (XY plane), and the positioner 126 moving one-dimensionally horizontally (X direction). The transfer of the transport tool 124 after being loaded into the input unit 118 may be referred to as automatic sample loading.

The first transport tool shuttle 134 has a first track portion 142 extending from the first side surface 114 to the second side surface 116. The first track portion 142 includes, for example, a track device including a belt, a chain, and the like. The first transport tool shuttle 134 includes a first motor 146 for driving the first track portion 142, on the second side surface 116 side. The first transport tool shuttle 134 includes a first sensor 150 on the first side surface 114 side. For example, the transport tool 124 transferred to the first transport tool shuttle 134 is positioned on the first track portion 142. The first transport tool shuttle 134 can transport the transport tool 124 positioned on the first track portion 142 to any location on the first track portion 142.

The second transport tool shuttle 136 is positioned adjacent to the first transport tool shuttle 134. The second transport tool shuttle 136 includes a second track portion 144 extending from the first side surface 114 to the second side surface 116. The second track portion 144 includes, for example, a track device. The second transport tool shuttle 136 includes a second motor 148 for driving the second track portion 144, on the second side surface 116 side. The second transport tool shuttle 136 includes a second sensor 152 on the first side surface 114 side. For example, the transport tool 124 transferred to the second transport tool shuttle 136 is positioned on the second track portion 144. The second transport tool shuttle 136 can transport the transport tool 124 positioned on the second track portion 144 to any location on the second track portion 144.

The analysis mechanism 2 further includes a first pipetting mechanism, a second pipetting mechanism, and a third pipetting mechanism (none of which are illustrated). The first pipetting mechanism is a mechanism for dispensing the first reagent, and is provided, for example, in an inner peripheral region of the reagent storage 102 and an outer peripheral region of the reaction disk 104. The second pipetting mechanism is a mechanism for dispensing the second reagent, and is provided, for example, in the inner peripheral region of the reagent storage 102 and an inner peripheral region of the reaction disk 104. The third pipetting mechanism is a mechanism for dispensing a sample, and is provided, for example, in an outer peripheral region of the reagent storage 102. The positions at which the first pipetting mechanism, the second pipetting mechanism, and the third pipetting mechanism are provided are not limited to the above positions.

The first pipetting mechanism includes a first reagent dispensing arm. The first reagent dispensing arm is vertically movable and horizontally rotatable by the drive mechanism 4. The first reagent dispensing arm holds a first reagent dispensing probe at one end.

The first reagent dispensing probe rotates along an arcuate first rotation orbit as the first reagent dispensing arm rotates. A first reagent suction position where the first reagent dispensing probe sucks the first reagent from the reagent bottle 300 is provided on the first rotation orbit. The first reagent suction position corresponds to, for example, an intersection of the first rotation orbit and a first annular path 209. In addition, a first reagent discharge position where the first reagent sucked up by the first reagent dispensing probe is discharged to the reaction container is provided on the first rotation orbit. The first reagent discharge position corresponds to, for example, an intersection of the first rotation orbit and the reaction tube annular path. In a case where a combination bottle is used instead of the reagent bottle 300, the first reagent dispensing probe sucks up the first reagent from a first opening of the first container. In addition, the first reagent suction position of the first opening of the combination bottle coincides with the first reagent suction position of the opening of the reagent bottle 300.

Note that a cleaning position at which the first reagent dispensing probe is cleaned may be provided at a position different from the first reagent suction position and the first reagent discharge position on the first rotation orbit. In addition, a cleaning tank for cleaning the first reagent dispensing probe may be provided at the cleaning position.

Under the control of the control circuit 9, the first reagent dispensing probe sucks up the first reagent from the reagent bottle 300 located immediately below the first reagent suction position. Then, under the control of the control circuit 9, the first reagent dispensing probe discharges the sucked up first reagent to the reaction tube located immediately below the first reagent discharge position. The first reagent dispensing probe performs a series of operations (dispensing operation) of suction and discharge once in one cycle, for example.

The second pipetting mechanism includes a second reagent dispensing arm. The second reagent dispensing arm is vertically movable and horizontally rotatable by the drive mechanism 4. The second reagent dispensing arm holds a second reagent dispensing probe at one end.

The second reagent dispensing probe rotates along an arcuate second rotation orbit as the second reagent dispensing arm rotates. A second reagent suction position where the second reagent dispensing probe sucks up the second reagent from the second opening of the second container in the combination bottle is provided on the second rotation orbit. The second reagent suction position corresponds to, for example, an intersection of the second rotation orbit and a second annular path (not illustrated) inside the first annular path 209. In addition, a second reagent discharge position where the second reagent sucked up by the second reagent dispensing probe is discharged to the reaction container is provided on the second rotation orbit. The second reagent discharge position corresponds to, for example, an intersection of the second rotation orbit and the reaction tube annular path.

Note that a cleaning position at which the second reagent dispensing probe is cleaned may be provided at a position different from the second reagent suction position and the second reagent discharge position on the second rotation orbit. In addition, a cleaning tank for cleaning the second reagent dispensing probe may be provided at the cleaning position.

Under the control of the control circuit 9, the second reagent dispensing probe sucks up the second reagent from the second container of the combination bottle located immediately below the second reagent suction position. Then, under the control of the control circuit 9, the second reagent dispensing probe discharges the sucked up second reagent to the reaction tube located immediately below the second reagent discharge position. The second reagent dispensing probe performs this dispensing operation, for example, once in one cycle.

The third pipetting mechanism includes a sample dispensing arm. The sample dispensing arm is vertically movable and horizontally rotatable by the drive mechanism 4. The sample dispensing arm holds a sample dispensing probe at one end.

The sample dispensing probe rotates along an arcuate third rotation orbit as the sample dispensing arm rotates. A first sample suction position and a second sample suction position at which the sample dispensing probe sucks up a sample from the sample container are provided on the third rotation orbit. The first sample suction position corresponds to, for example, an intersection of the third rotation orbit and the first track portion 142. The second sample suction position corresponds to, for example, an intersection of the third rotation orbit and the second track portion 144. In addition, a sample discharge position for discharging the sample sucked up by the sample dispensing probe to the reaction container is provided on the third rotation orbit. The sample discharge position corresponds to, for example, an intersection of the third rotation orbit and the reaction tube annular path.

Note that a cleaning position at which the sample dispensing probe is cleaned may be provided at a position different from the first sample suction position, the second sample suction position, and the sample discharge position on the third rotation orbit. In addition, a cleaning tank for cleaning the sample dispensing probe may be provided at the cleaning position.

Under the control of the control circuit 9, the sample dispensing probe sucks up a sample from a sample container located immediately below the first sample suction position or from a sample container located immediately below the second sample suction position. Then, under the control of the control circuit 9, the sample dispensing probe discharges the sucked up sample to the reaction tube located immediately below the sample discharge position. The sample dispensing probe performs this dispensing operation, for example, once in one cycle.

Although not illustrated in FIG. 2, the analysis mechanism 2 further includes an electrode unit, a photometric unit, a cleaning unit, and a stirring unit. The electrode unit measures the electrolyte concentration of the mixed liquid of the sample and the reagent discharged into the reaction tube. The photometric unit optically measures a predetermined component in the mixed liquid. The cleaning unit cleans the inside of the reaction tube in which the measurement of the mixed liquid is completed in the electrode unit or the photometric unit. The stirring unit includes a stirring bar, and the stirring bar stirs a sample, a reagent, a mixed liquid, and the like contained in the reaction tube located immediately below a stirring position on the reaction disk 104.

Next, each function of the control circuit 9 according to the embodiment will be described. The control circuit 9 illustrated in FIG. 1 executes an operation program stored in the storage circuit 8 to implement a function corresponding to the program. For example, the control circuit 9 includes a system control function 91 by executing the operation program.

In the embodiment, a case where the system control function 91 is realized by a single processor will be described, but the present invention is not limited thereto. For example, a control circuit may be configured by combining a plurality of independent processors, and the system control function 91 may be realized by each processor executing the operation program.

With the use of the system control function 91, the control circuit 9 comprehensively controls each unit in the automatic analyzing apparatus 1, based on, for example, input information input from the input interface 5. Specifically, the control circuit 9 controls the rotation operation of the reagent rack and the reaction disk 104 of the reagent storage 102, the rotation operation and dispensing operation of the sample dispensing probe, the rotation operation and dispensing operation of the first reagent dispensing probe, the rotation operation and dispensing operation of the second reagent dispensing probe, and the like. In addition, the control circuit 9 controls the operations of the positioner 126, the code reader 127, the arm 130, the first transport tool shuttle 134, and the second transport tool shuttle 136.

Note that the reagent bottle 300 in the present embodiment may be a dedicated reagent bottle designed exclusively for the automatic analyzing apparatus 1 in the embodiment, or may be an integral body of a general-purpose reagent bottle and an adapter for general-purpose reagent bottle. The general-purpose reagent bottle is a reagent bottle that can be commonly used by companies that manufacture automatic analyzing apparatuses. The adapter for general-purpose reagent bottle is an adapter that can realize automatic reagent loading in the automatic analyzing apparatus in the embodiment by being attached to a general-purpose reagent bottle. In other words, the adapter for general-purpose reagent bottle is an adapter that is used by being assembled in the automatic analyzing apparatus 1 and is attachable to a general-purpose reagent bottle.

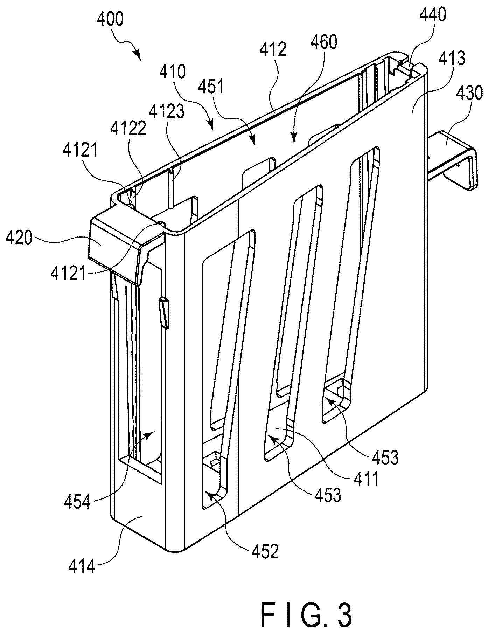

The configuration of the automatic analyzing apparatus using the adapter for general-purpose reagent bottle according to the embodiment has been described above. Next, an adapter 400 for general-purpose reagent bottle according to the embodiment will be described with reference to FIG. 3 to FIG. 8.

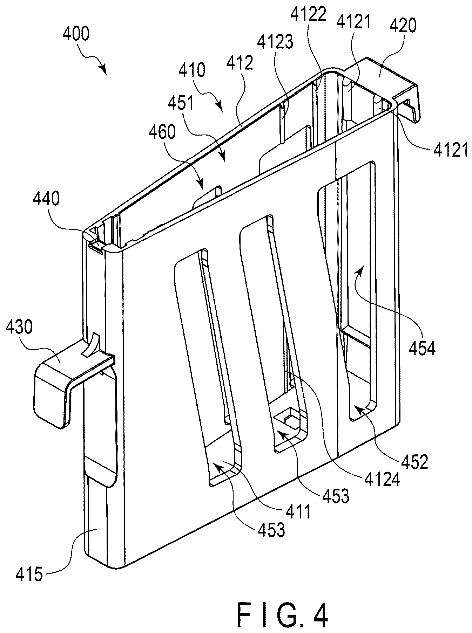

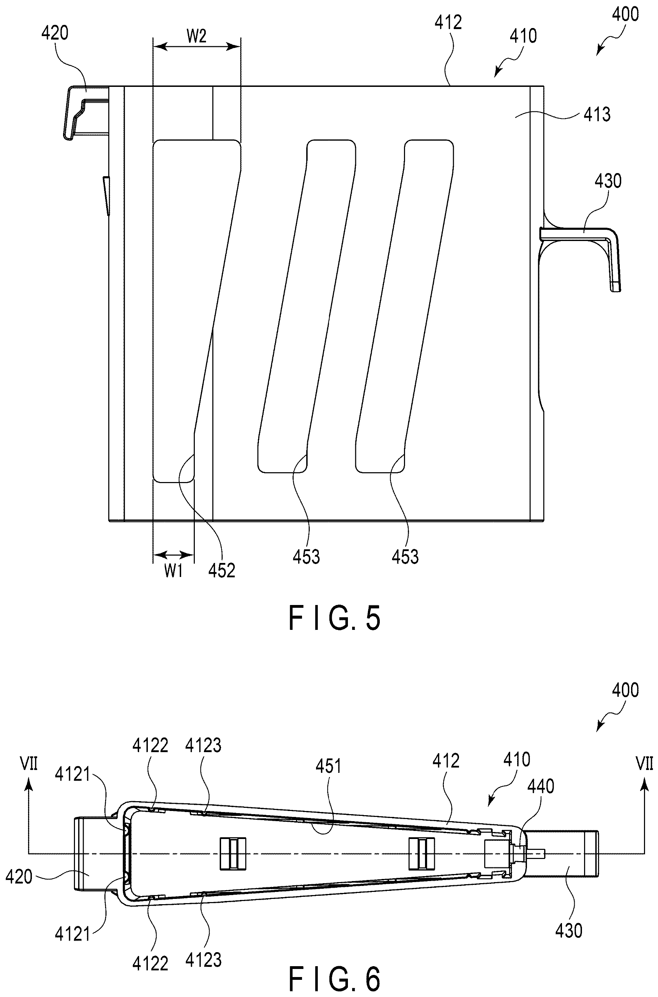

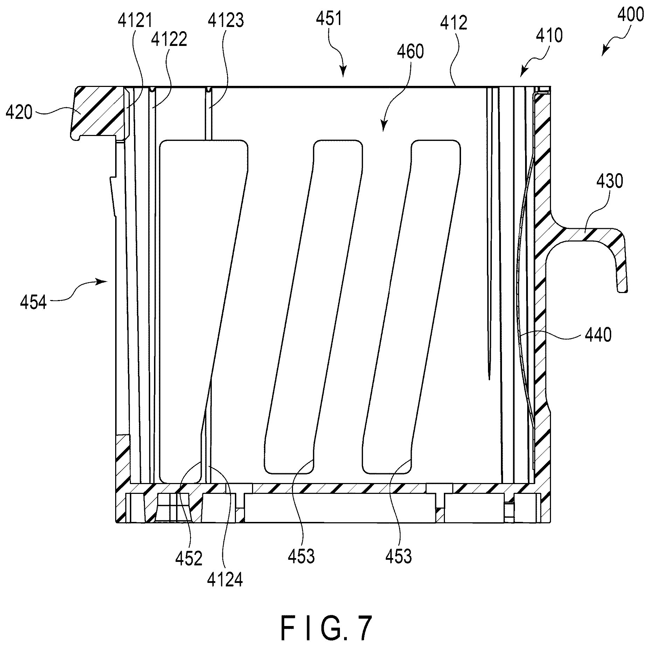

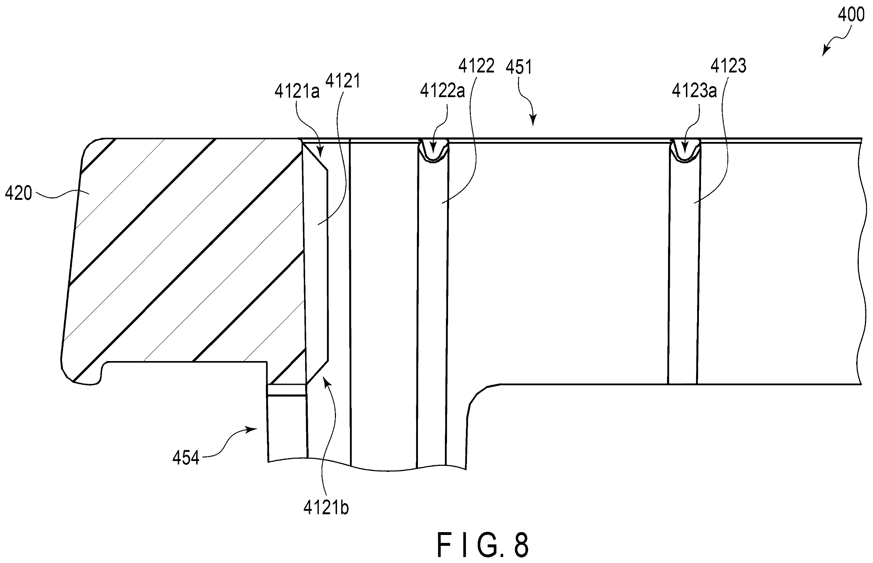

FIG. 3 is a perspective view exemplarily illustrating a configuration of the adapter 400 for general-purpose reagent bottle. FIG. 4 is a perspective view exemplarily illustrating, from another viewpoint, the configuration of the adapter 400 for general-purpose reagent bottle of FIG. 3. FIG. 5 is a side view exemplarily illustrating the configuration of the adapter 400 for general-purpose reagent bottle. FIG. 6 is a top view exemplarily illustrating the configuration of the adapter 400 for general-purpose reagent bottle. FIG. 7 is a cross-sectional view exemplarily illustrating, by a cross section along line VII-VII in FIG. 6, the configuration of the adapter 400 for general-purpose reagent bottle. FIG. 8 is a cross-sectional view exemplarily illustrating, in enlarged scale, a configuration of ribs of FIG. 7.

As illustrated in FIG. 3 and FIG. 4, the adapter 400 for general-purpose reagent bottle includes a main body 410, a held portion 420, a user held portion 430, and a plate spring 440. The held portion 420 and the user held portion 430 are provided to project outward from the main body 410, and are located on mutually opposite sides with the main body 410 being interposed.

In the description below, the held portion 420 side is defined as a rear side (rear direction) of the main body 410, the user held portion 430 side is defined as a front side (front direction) of the main body 410, and a direction perpendicular to the front-and-rear direction and the direction of gravity is defined as a left-and-right direction of the main body 410.

The main body 410 includes a bottom portion 411 and a side peripheral portion 412. The bottom portion 411 has a substantially trapezoidal shape in plan view, and the rear side of the main body 410 and the front side of the main body 410 are parallel. In addition, the bottom portion 411 is formed to become narrower inward, toward the front side of the main body 410 from the rear side of the main body 410. The side peripheral portion 412 is formed vertically upward from a peripheral edge of the bottom portion 411.

In the description below, mutually opposed surfaces in the left-and-right direction of the main body 410 in the side peripheral portion 412 are defined as side wall portions 413, a surface on the rear side of the main body 410 is defined as a rear wall portion 414, and a surface on the front side of the main body 410 is defined as a front wall portion 415. In other words, the side peripheral portion 412 includes at least four surfaces, namely the two side wall portions 413, the rear wall portion 414 and the front wall portion 415.

In the main body 410, a first opening portion 451 is formed as a region surrounded by an upper end of the side peripheral portion 412. The first opening portion 451 has a substantially trapezoidal shape in plan view. A storing space 460 is formed in the inside of the main body 410.

A plurality of opening portions are formed in the side peripheral portion 412. Specifically, in the side wall portion 413 that the side peripheral portion 412 includes, a second opening portion 452 and two third opening portions 453 are formed in order from the rear side of the main body 410 toward the front side of the main body 410. In addition, a fourth opening portion 454 is formed in the rear wall portion 414 that the side peripheral portion 412 includes.

The second opening portion 452 has a substantially trapezoidal shape in plan view of the side wall portion 413, and a lower end and an upper end thereof are formed to be parallel. In addition, the second opening portion 452 is formed such that only a side located on the front side of the main body 410 gradually widens to the outside, from the lower side of the main body 410 toward the upper side of the main body 410. As illustrated in FIG. 5, in the second opening portion 452, a width W2 of the upper end is greater than a width W1 of the lower end. In addition, as illustrated in FIG. 7, the lower end of the second opening portion 452 is at the same position as a bottom surface of the storing space 460.

The two third opening portions 453 are formed more on the front side of the main body 410 than the second opening portion 452. In addition, the two third opening portions 453 are formed to be arranged from the rear side of the main body 410 toward the front side of the main body 410. Each third opening portion 453 has a substantially parallelogrammatic shape in plan view of the side wall portion 413, and an upper end thereof is formed to be located more on the front side of the main body 410 than a lower end thereof.

The fourth opening portion 454 is formed in a vertically elongated rectangular shape in side view of the rear wall portion 414.

Further, a plurality of ribs are formed on the side peripheral portion 412. Specifically, two first ribs 4121 are formed in the up-and-down direction with a predetermined distance in the left-and-right direction, on the inside of the rear wall portion 414 (on the storing space 460 side) that the side peripheral portion 412 includes. In addition, on the inside of the side wall portion 414 (on the storing space 460 side) that the side peripheral portion 412 includes, a second rib 4122, a third rib 4123 and a fourth rib 4124 are formed in order in the up-and-down direction from the rear side toward the front side of the main body 410. Note that the third rib 4123 and the fourth rib 4124 have an identical center axis in the up-and-down direction. In addition, the second opening 452 is located between the third rib 4123 and the fourth rib 4124.

The first rib 4121 is formed to extend from an upper end of the side peripheral portion 412 to an upper end of the fourth opening portion 454. In addition, a taper 4121a is formed at an upper end of the first rib 4121, and a taper 4121b is formed at a lower end thereof. An angle (draft) of the taper 4121b may be smaller than an angle of the taper 4121a.

The second rib 4122 is located more on the rear side of the main body 410 than the second opening portion 452, and is formed to extend from the upper end of the side peripheral portion 412 to the bottom surface of the storing space 460. Further, a taper 4122a is formed at an upper portion of the second rib 4122.

The third rib 4123 is located at a point along an upper end of the second opening portion 452 and located more on the front side of the main body 410 than a lower end of the second opening portion 452, and is formed to extend from the upper end of the side peripheral portion 412 to the upper end of the second opening portion 452. In addition, a taper 4123a is formed at an upper portion of the third rib 4123.

The fourth rib 4124 is formed to extend to the bottom surface of the storing space 460 from a portion at which the third rib 4123, if extended downward, intersects with the side wall portion 413.

The held portion 420 is provided to project to the outside of the side peripheral portion 412. Specifically, the held portion 420 is formed as a hook-shaped portion that includes a portion horizontally extending outward from an upper end of the rear wall portion 414 that the side peripheral portion 412 includes, and a portion having a distal end projecting downward. In addition, a flat-plate rib, which is surrounded by the held portion 420 and the rear wall portion 414, is provided in a plane perpendicular to the two portions. The held portion 420 locks with the automatic loading mechanism. The "locking" means mutually associated engagement. Note that the held portion 420 may be a portion molded as one piece with the main body 410, as illustrated in FIG. 3, or may be a portion that is molded separately from the main body 410 and then fixed to the main body 410 by adhesion, welding, screwing, or the like. Besides, the held portion 420 may be formed as a recess portion in the side peripheral portion 412.

The user held portion 430 is provided to project to the outside of the side peripheral portion 412. Specifically, the user held portion 430 is located between an upper end and a lower end of the front wall portion 415 that the side peripheral portion 412 includes, and is located below a lower end of the held portion 420, and is formed as a hook-shaped portion that includes a portion horizontally extending outward from this location, and a portion having a distal end projecting downward. The user held portion 430 is a handle for transportation by the user. Note that the user held portion 430 may be a portion molded as one piece with the main body 410, as illustrated in FIG. 3, or may be a portion that is molded separately from the main body 410 and then fixed to the main body 410 by adhesion, welding, screwing, or the like.

The plate spring 440 is provided in the storing space 460 that is the inside of the main body 410. Specifically, the plate spring 440 is provided downward from an upper end of the front wall portion 415, on the inside of the front wall portion 415 (on the storing space 460 side) that the side peripheral portion 412 includes. For example, the plate spring 440 has an upper portion fixed, and has a lower portion opened, and the lower portion of the plate spring 440 moves downward by pressure being applied to the entirety of the plate spring 440.

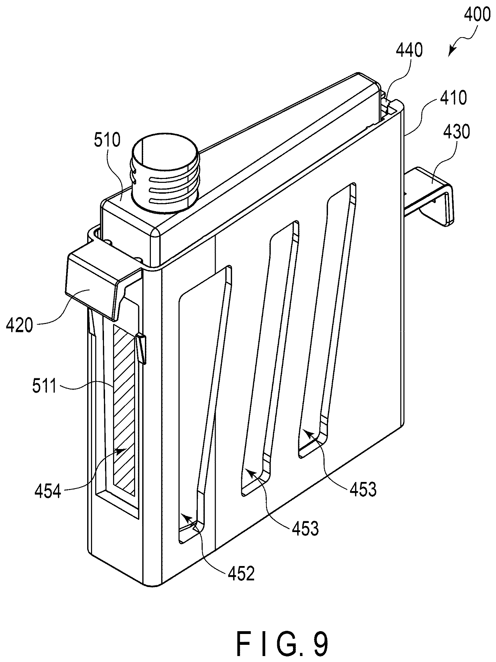

FIG. 9 is a perspective view illustrating a first example of use of the adapter for general-purpose reagent bottle according to the embodiment. As illustrated in FIG. 9, the adapter 400 for general-purpose reagent bottle holds a general-purpose reagent bottle 510 of a standard size (for example, 70 mL bottle). The adapter 400 for general-purpose reagent bottle is configured such that the general-purpose reagent bottle 510 is attached from a bottom portion thereof.

The general-purpose reagent bottle 510 includes, in an upper portion of the main body thereof, a cylindrical mouth portion for inputting and outputting a reagent contained in the inside of the general-purpose reagent bottle 510. In addition, the plate spring 440 of FIG. 9 applies pressure to the general-purpose reagent bottle 510 by the restoring force thereof, thereby setting the positional relationship between the center axis of the mouth portion of the general-purpose reagent bottle 510 and the main body 410. In other words, the plate spring 440 can keep the mouth portion of the general-purpose reagent bottle 510 at a predetermined position of the main body 410.

The general-purpose reagent bottle 510, to which the adapter 400 for general-purpose reagent bottle is attached, can be in contact with outside air through the second opening portion 452 and third opening portions 453 provided in the main body 410. For example, at a time when the general-purpose reagent bottle 510, to which the adapter 400 for general-purpose reagent bottle is attached, is contained in the reagent storage 102, the air in the reagent storage 102 can be put in contact with the general-purpose reagent bottle 510, and thus the reagent contained in the general-purpose reagent bottle 510 can efficiently be cooled.

In addition, since the fourth opening portion 454 is provided at a position corresponding to a code 511 added to the general-purpose reagent bottle 510, the automatic analyzing apparatus 1 can read the code 511 even in the state in which the general-purpose reagent bottle 510 is attached to the adapter 400 for general-purpose reagent bottle. Hence, the fourth opening portion 454 may be referred to as "code opening portion".

Further, on the inside of the rear wall portion 414, since the two first ribs 4121 are formed with a predetermined distance in the right-and-left direction along the direction of attachment of the general-purpose reagent bottle 510, at least one of the two first ribs 4121 does not come in contact with the code 511 added to the general-purpose reagent bottle 510 at a time when the general-purpose reagent bottle 510 is attached to the adapter 400 for general-purpose reagent bottle.

Further, since the lower end of the second opening portion 452 is at the same position as the bottom surface of the storing space 460, at a time when the user attaches the general-purpose reagent bottle 510 to the adapter 400 for general-purpose reagent bottle, the user can confirm whether the general-purpose reagent bottle 510 is surely attached to the adapter 400 for general-purpose reagent bottle.

Further, since the second opening portion 452 and the like are opening in the up-and-down direction, the user can confirm the liquid amount of the reagent contained in the general-purpose reagent bottle 510 attached to the adapter 400 for general-purpose reagent bottle.

Further, since the opening area is wider in the upper portion of the second opening portion 452, at a time when the user removes the general-purpose reagent bottle 510 attached to the adapter 400 for general-purpose reagent bottle from the adapter 400 for general-purpose reagent bottle, the user can hold a wide range of the surface of the general-purpose reagent bottle 510. Thus, the user can easily remove the general-purpose reagent bottle 510 from the adapter 400 for general-purpose reagent bottle.

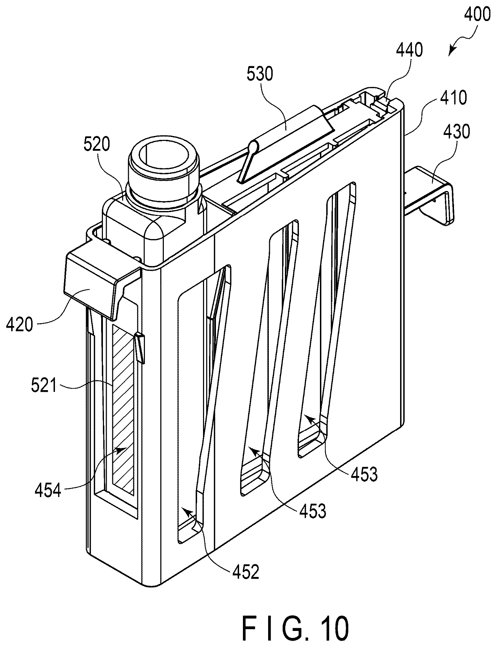

FIG. 10 is a perspective view illustrating a second example of use of the adapter for general-purpose reagent bottle according to the embodiment. As illustrated in FIG. 10, the adapter 400 for general-purpose reagent bottle holds a general-purpose reagent bottle 520 of a small size (for example, 20 mL bottle) together with a spacer 530, and fixes the general-purpose reagent bottle 520 via the spacer 530 by the restoring force of the plate spring 440. The adapter 400 for general-purpose reagent bottle is configured such that the general-purpose reagent bottle 520 is attached from a bottom portion thereof.

The general-purpose reagent bottle 520 includes, in an upper portion of the main body thereof, a cylindrical mouth portion for inputting and outputting a reagent contained in the inside of the general-purpose reagent bottle 520. In addition, the plate spring 440 of FIG. 10 applies pressure to the spacer 530 by the restoring force thereof, thereby setting the positional relationship between the center axis of the mouth portion of the general-purpose reagent bottle 520 and the main body 410 via the spacer 530. In other words, the plate spring 440 can keep the mouth portion of the general-purpose reagent bottle 520 at a predetermined position of the main body 410.

The general-purpose reagent bottle 520, to which the adapter 400 for general-purpose reagent bottle is attached, can be in contact with outside air through the second opening portion 452 and third opening portions 453 provided in the main body 410. For example, at a time when the general-purpose reagent bottle 520, to which the adapter 400 for general-purpose reagent bottle is attached, is contained in the reagent storage 102, the air in the reagent storage 102 can be put in contact with the general-purpose reagent bottle 520, and thus the reagent contained in the general-purpose reagent bottle 520 can efficiently be cooled.

In addition, since the fourth opening portion 454 is provided at a position corresponding to a code 521 added to the general-purpose reagent bottle 520, the automatic analyzing apparatus 1 can read the code 521 even in the state in which the general-purpose reagent bottle 520 is attached to the adapter 400 for general-purpose reagent bottle.

Further, on the inside of the rear wall portion 414, since the two first ribs 4121 are formed with a predetermined distance in the right-and-left direction along the direction of attachment of the general-purpose reagent bottle 520, at least one of the two first ribs 4121 does not come in contact with the code 521 added to the general-purpose reagent bottle 520 at a time when the general-purpose reagent bottle 520 is attached to the adapter 400 for general-purpose reagent bottle.

Further, since the lower end of the second opening portion 452 is at the same position as the bottom surface of the storing space 460, at a time when the user attaches the general-purpose reagent bottle 520 to the adapter 400 for general-purpose reagent bottle, the user can confirm whether the general-purpose reagent bottle 520 is surely attached to the adapter 400 for general-purpose reagent bottle.

Further, since the second opening portion 452 and the like are opening in the up-and-down direction, the user can confirm the liquid amount of the reagent contained in the general-purpose reagent bottle 520 attached to the adapter 400 for general-purpose reagent bottle.

Further, since the opening area is wider in the upper portion of the second opening portion 452, at a time when the user removes the general-purpose reagent bottle 520 attached to the adapter 400 for general-purpose reagent bottle from the adapter 400 for general-purpose reagent bottle, the user can hold a wide range of the surface of the general-purpose reagent bottle 520. Thus, the user can easily remove the general-purpose reagent bottle 520 from the adapter 400 for general-purpose reagent bottle.

### (Applied Example)

The adapter 400 for general-purpose reagent bottle may be formed of, for example, a resin material. In addition, for example, at least a part of the adapter 400 for general-purpose reagent bottle may be formed of a resin material having a high transparency. Specifically, in a case where a region in the up-and-down direction of the main body 410 is formed of a resin material having a high transparency, the user can easily confirm the liquid amount of the attached general-purpose reagent bottle 510 (or general-purpose reagent bottle 520). Further, in a case where a resin material having a high transparency is used for a part corresponding to the fourth opening portion 454 (i.e., a position corresponding to the code 521 added to the general-purpose reagent bottle 510), the automatic analyzing apparatus 1 can read the code attached to the general-purpose reagent bottle 510.

Besides, the adapter 400 for general-purpose reagent bottle may be formed of, for example, a metallic material. The adapter for general-purpose reagent bottle, which is formed of a metallic material, has a higher strength than a resin material, the opening formed in the side wall can be made larger. Since the opening formed in the side wall can be made larger, the adapter 400 for general-purpose reagent bottle can efficiently cool the general-purpose reagent bottle 510 at a time when the general-purpose reagent bottle 510 is contained in the reagent storage 102.

As described above, in brief outline, the adapter 400 for general-purpose reagent bottle may be attached to the reagent container (general-purpose reagent bottle 510, general-purpose reagent bottle 520, or the like) used in the automatic analyzing apparatus 1, and may be contained in the reagent storage 102 in the automatic analyzing apparatus 1 together with the reagent container to which the adapter 400 for general-purpose reagent bottle is attached. The adapter 400 for general-purpose reagent bottle may include the main body 410 including the first opening portion 451 and the second opening portion 452 different from the first opening portion 451, and the held portion 420 provided on the main body 410 and held by the transfer mechanism that the automatic analyzing apparatus 1 includes. The first opening portion 451 may be configured such that the reagent container can be attached and detached through the first opening portion 451. The second opening portion 452 may bring air in the reagent storage 102 in contact with the reagent container at a time when the reagent container is contained in the reagent storage 102.

Additionally, the main body 410 may include the bottom portion 411 and the side peripheral portion 412 formed vertically upward from a peripheral edge of the bottom portion 411, and the first opening portion 451 may be formed as a region surrounded by an upper end of the side peripheral portion 412.

Additionally, the side peripheral portion 412 may include at least four surfaces (two side wall portions 413, rear wall portion 414, and front wall portion 415), and the second opening portion 452 may be formed in each of two mutually opposed surfaces (side wall portions 413) of the four surfaces at a time when the reagent container is attached.

Additionally, in a case where the reagent container includes the cylindrical mouth portion for inputting and outputting a reagent contained in the inside thereof, the second opening portion 452 may be formed at a position closest from the center axis of the mouth portion.

Additionally, the lower end of the second opening portion 452 may be at the same position as the bottom surface of the storing space 460 formed in the inside of the main body 410. Further, the width of the upper end of the second opening portion 452 may be greater than the width of the lower end of the second opening portion.

Additionally, the held portion 420 may be provided to project to the outside of the side peripheral portion 412 on the surface (rear wall portion 414) that is among the four surfaces of the side peripheral portion 412 and is different from the surface (side wall portion 413) in which the second opening portion 452 is formed, the main body 410 may further include the fourth opening portion 454 at the position corresponding to the code (code 511, code 521, or the like) added to the reagent container, and the fourth opening portion 454 may be formed in the surface (rear wall portion 414) which is among the four surfaces and on which the held portion 420 is provided.

Additionally, the main body 410 may include the two first ribs 4121 formed along the direction of attachment of the reagent container on the inside of the surface (rear wall portion 414) on which the held portion 420 is provided, and at least one of the two first ribs 4121 may not come in contact with the code added to the reagent container at a time when the reagent container is attached.

Additionally, the taper 4121a may be formed at the upper end of each of the two first ribs 4121.

Additionally, the adapter 400 for general-purpose reagent bottle may further include the plate spring 440 provided in the inside of the main body 410, and in a case where the reagent container includes the cylindrical mouth portion for inputting and outputting the contained reagent, the plate spring 440 may apply pressure to the reagent container at a time when the reagent container is attached, thereby setting the positional relationship between the center axis of the mouth portion and the main body 410.

Additionally, at a time when the reagent container (general-purpose reagent bottle 520) and the spacer 530 are attached, the plate spring 440 may apply pressure to the general-purpose reagent container 520 via the spacer 530, thereby setting the positional relationship between the center axis of the mouth portion and the main body 410.

Additionally, the main body 410 may further include the third opening portion 453 in the surface (side wall portion 413) in which the second opening portion 452 is formed, and the third opening portion 453 may bring air in the reagent storage 102 in contact with the reagent container at a time when the reagent container is contained in the reagent storage 102.

Additionally, the main body 410 may be formed of a material having a higher strength than a resin. Besides, the main body may be formed of a metallic material as the material having the higher strength than the resin.

Additionally, at least a part of the main body 410 may be formed of a resin having a high transparency. Besides, the main body 410 may use the resin material having the high transparency at a position corresponding to a code added to the reagent container.

Additionally, the reagent container may be attached in the main body 410 from above.

Note that the term "adapter for general-purpose reagent bottle" in the above description may be read simply as "adapter", or may be read as "adapter for reagent bottle", "adapter for general-purpose reagent container", or "adapter for reagent container".

As has been described above, the adapter according to the embodiment is an adapter that is attached to the reagent container used in the automatic analyzing apparatus, and is contained in the reagent storage in the automatic analyzing apparatus together with the reagent container to which the adapter is attached, and the adapter includes the main body and the held portion. The main body includes the first opening portion, and the second opening portion different from the first opening portion. The first opening portion is configured such that the reagent container can be attached and detached through the first opening portion. The second opening portion brings air in the reagent storage in contact with the reagent container at a time when the reagent container is contained in the reagent storage. The held portion is provided on the main body and held by the transfer mechanism that the automatic analyzing apparatus includes.

Therefore, in the adapter according to the embodiment, for example, even in a case where a general-purpose reagent bottle is used as a reagent container, automatic reagent loading can be performed, and a reagent provided in the general-purpose reagent bottle can be used. This makes it possible to reduce the cost relating to the operation of the automatic analyzing apparatus including the automatic reagent loading mechanism and to improve convenience.

According to at least one of the above-described embodiments, it is possible to reduce the cost relating to the operation of the automatic analyzing apparatus including the automatic reagent loading mechanism and to improve convenience.

While certain embodiments have been described, these embodiments have been presented by way of example only, and are not intended to limit the scope of the inventions. Indeed, the novel embodiments described herein may be embodied in a variety of other forms; furthermore, various omissions, substitutions and changes in the form of the embodiments described herein may be made without departing from the scope of the invention as defined by the appended claims.

## Claims

1. An adapter (400) that is attached to a reagent container used in an automatic analyzing apparatus (1), and that is contained in a reagent storage (102) in the automatic analyzing apparatus (1) together with the reagent container to which the adapter (400) is attached, comprising:
a main body (410) including a first opening portion (451), and a second opening portion (452) different from the first opening portion (451); and
a held portion (420) provided on the main body (410) and held by a transfer mechanism that the automatic analyzing apparatus (1) includes, wherein
the first opening portion (451) is configured such that the reagent container is attachable and detachable through the first opening portion (451), and
the second opening portion (452) brings air in the reagent storage (102) in contact with the reagent container at a time when the reagent container is contained in the reagent storage (102).

2. The adapter (400) according to claim 1, wherein
the main body (410) includes a bottom portion (411), and a side peripheral portion (412) formed vertically upward from a peripheral edge of the bottom portion (411), and
the first opening portion (451) is formed as a region surrounded by an upper end of the side peripheral portion (412).

3. The adapter (400) according to claim 2, wherein
the side peripheral portion (412) includes at least four surfaces, and
the second opening portion (452) is formed in each of two mutually opposed surfaces of the four surfaces at a time when the reagent container is attached.

4. The adapter (400) according to claim 3, wherein, in a case where the reagent container includes a cylindrical mouth portion for inputting and outputting a reagent contained in an inside thereof, the second opening portion (452) is formed at a position closest from a center axis of the mouth portion.

5. The adapter (400) according to claim 4, wherein a lower end of the second opening portion (452) is at the same position as a bottom surface of a storing space formed in an inside of the main body (410).

6. The adapter (400) according to claim 5, wherein a width of an upper end of the second opening portion (452) is greater than a width of the lower end of the second opening portion (452).

7. The adapter (400) according to claim 3, wherein
the held portion (420) is provided to project to an outside of the side peripheral portion (412) on a surface that is among the four surfaces and is different from the surface in which the second opening portion (452) is formed,
the main body (410) further includes a code opening portion at a position corresponding to a code added to the reagent container, and
the code opening portion is formed in the surface which is among the four surfaces and on which the held portion (420) is provided.

8. The adapter (400) according to claim 7, wherein
the main body (410) includes two ribs formed along a direction of attachment of the reagent container on an inside of the surface on which the held portion (420) is provided, and
at least one of the two ribs does not come in contact with the code added to the reagent container at a time when the reagent container is attached.

9. The adapter (400) according to claim 8, wherein a taper is formed at an upper end of each of the two ribs.

10. The adapter (400) according to claim 1, wherein further comprising a plate spring (440) provided in an inside of the main body (410), wherein
in a case where the reagent container includes a cylindrical mouth portion for inputting and outputting a contained reagent, the plate spring (440) applies pressure to the reagent container at a time when the reagent container is attached, thereby setting a positional relationship between a center axis of the mouth portion and the main body (410).

11. The adapter (400) according to claim 10, wherein, at a time when the reagent container and a spacer (530) are attached, the plate spring (440) applies pressure to the reagent container via the spacer (530), thereby setting the positional relationship between the center axis of the mouth portion and the main body (410).

12. The adapter (400) according to claim 1, wherein
the main body (410) further includes a third opening portion (453) in a surface in which the second opening portion (452) is formed, and
the third opening portion (453) brings air in the reagent storage (102) in contact with the reagent container at a time when the reagent container is contained in the reagent storage (102).

13. The adapter (400) according to claim 1, wherein the main body (410) is formed of a material having a higher strength than a resin.

14. The adapter (400) according to claim 13, wherein the main body (410) is formed of a metallic material as the material.

15. The adapter (400) according to claim 1, wherein at least a part of the main body (410) is formed of a resin having a high transparency.

16. The adapter (400) according to claim 15, wherein the main body (410) uses the resin having the high transparency at a position corresponding to a code added to the reagent container.

17. The adapter (400) according to claim 1, wherein the reagent container is attached in the main body (410) from above.
